# EUROPEAN PATENT APPLICATION

(11) **EP 4 729 491 A1**
(43) Date of publication of application: **22.04.2026**
(21) Application number: 25209823.1
(22) Date of filing: 20.10.2025
(51) Int. Cl.: C02F 1/66, C02F 11/00, C02F 101/16, C02F 103/00, C02F 1/38

(54) **NEUTRALIZATION PROCESSING SYSTEM FOR AMMONIA-CONTAINING WASTE FLUID AND NEUTRALIZATION PROCESSING METHOD FOR AMMONIA-CONTAINING WASTE FLUID**

(30) Priority: 21.10.2024 JP 2024185413
(71) Applicant: Mitsubishi Kakoki Kaisha, Ltd, Kawasaki-shi, Kanagawa 210-8560 (JP)
(72) Inventor: SAITO, Shunma, Kawasaki-shi, Kanagawa, 210-8560 (JP); OTANI, Yoichiro, Kawasaki-shi, Kanakawa, 210-8560 (JP); MATSUNARI, Kenji, Kawasaki-shi, Kanagawa, 210-8560 (JP)
(74) Representative: Daub, Thomas

(57) **Abstract**

A neutralization processing system for an ammonia-containing waste fluid, which neutralizes the ammonia-containing waste fluid containing ammonia, the neutralization processing system includes: one or more neutralization sludge tanks; a sludge discharge line configured to supply the ammonia-containing waste fluid to the neutralization sludge tank; a neutralizer supply line configured to supply a neutralizer to the neutralization sludge tank; a sludge circulation line configured to discharge the ammonia-containing waste fluid stored in the neutralization sludge tank from the neutralization sludge tank and return the ammonia-containing waste fluid to the neutralization sludge tank; and a sludge transfer pump provided in the sludge circulation line and configured to move the ammonia-containing waste fluid.

## Description

### BACKGROUND

### 1. Field of the Invention

The present disclosure relates to a neutralization processing system for an ammonia-containing waste fluid and a neutralization processing method for an ammonia-containing waste fluid.

### 2. Description of the Related Art

When an ammonia fuel, which is considered to be a carbon-neutral fuel, is used in a generator, an ammonia combustion engine, and the like in a ship or the like, ammonia may be mixed into a lubricating oil.

If the ammonia is mixed into the lubricating oil, the ammonia is mixed into sludge and separated water to be discharged from a lubricating oil purifier, and when an odor concentration exceeds the onboard regulation of 25 ppm, the sludge and the separated water cannot be incinerated or unloaded.

In order to reduce ammonia gas or ammonia water generated on the ship to a human body or the environment, for example, an ammonia water storage system and an ammonia fuel ship described in JP2023-93265A are known.

The ammonia water storage system described in JP2023-93265A includes an ammonia water storage tank that stores the ammonia gas or the ammonia water, a water supply line that supplies seawater to the ammonia water storage tank, and a drain line that discharges the ammonia water in the ammonia water storage tank to the outside of the ship.

The ammonia water storage system and the ammonia fuel ship described in JP2023-93265A neutralize the ammonia gas or the ammonia water generated on the ship in an ammonia neutralization device and then discharge the ammonia gas or the ammonia water overboard through a discharge line.

In recent years, it is desired that a lubricating oil containing ammonia used in an engine mounted on the ship or the like can be neutralized to a safe level on the ship, and then incinerated on the ship or disposed by unloading the sludge resulting from the purification of the lubricating oil.

### SUMMARY

An object of the present disclosure is to solve the above problems and to provide a neutralization processing system for an ammonia-containing waste fluid and a neutralization processing method for an ammonia-containing waste fluid, which can neutralize ammonia mixed in a lubricating oil to a safe level after separation, and enable sludge to be unloaded and incinerated on a ship.

According to an aspect of the present disclosure, there is provided a neutralization processing system for an ammonia-containing waste fluid, which neutralizes the ammonia-containing waste fluid containing ammonia, the neutralization processing system including: one or more neutralization sludge tanks; a sludge discharge line configured to supply the ammonia-containing waste fluid to the neutralization sludge tank; a neutralizer supply line configured to supply a neutralizer to the neutralization sludge tank; a sludge circulation line configured to discharge the ammonia-containing waste fluid stored in the neutralization sludge tank from the neutralization sludge tank and return the ammonia-containing waste fluid to the neutralization sludge tank; and a sludge transfer pump provided in the sludge circulation line and configured to move the ammonia-containing waste fluid.

According to another aspect of the present disclosure, there is provided a neutralization processing method for an ammonia-containing waste fluid, which neutralizes the ammonia-containing waste fluid containing ammonia, the neutralization treatment method including: supplying a neutralizer from a neutralizer supply line to a neutralization sludge tank in which the ammonia-containing waste fluid is stored to neutralize the ammonia-containing waste fluid; and circulating the neutralized ammonia-containing waste fluid in the neutralization sludge tank through a sludge circulation line by a sludge transfer pump provided in the sludge circulation line, and supplying the ammonia-containing waste fluid to the neutralization sludge tank, thereby stirring the ammonia-containing waste fluid.

The neutralization processing system for an ammonia-containing waste fluid and the neutralization processing method for an ammonia-containing waste fluid of the present disclosure can neutralize the ammonia mixed in the lubricating oil to a safe level after separation, and enable the sludge to be unloaded and incinerated on the ship.

### BRIEF DESCRIPTION OF THE DRAWINGS

The present disclosure will become more fully understood from the detailed description given hereinbelow and the accompanying drawing which is given by way of illustration only, and thus is not limitative of the present disclosure and wherein:
Fig. 1 is a block diagram illustrating a modification of a neutralization processing system for an ammonia-containing waste fluid and a neutralization processing method for an ammonia-containing waste fluid according to a first embodiment of the present disclosure;
Fig. 2 is a block diagram illustrating main parts of a neutralization processing system for an ammonia-containing waste fluid and a neutralization processing method for an ammonia-containing waste fluid according to a second embodiment of the present disclosure, in which a control device is omitted;
Fig. 3 is a block diagram illustrating main parts of a neutralization processing system for an ammonia-containing waste fluid and a neutralization processing method for an ammonia-containing waste fluid according to a third embodiment of the present disclosure, in which a control device is omitted;
Fig. 4 is a block diagram illustrating main parts of a neutralization processing system for an ammonia-containing waste fluid and a neutralization processing method for an ammonia-containing waste fluid according to a fourth embodiment of the present disclosure, in which a control device is omitted;
Fig. 5 is a block diagram illustrating main parts of a neutralization processing system for an ammonia-containing waste fluid and a neutralization processing method for an ammonia-containing waste fluid according to a fifth embodiment of the present disclosure, in which a control device is omitted;
Fig. 6 is a block diagram illustrating main parts of a neutralization processing system for an ammonia-containing waste fluid and a neutralization processing method for an ammonia-containing waste fluid according to a sixth embodiment of the present disclosure, in which a control device is omitted;
Fig. 7 is a block diagram illustrating a neutralization processing method for an ammonia-containing waste fluid according to a seventh embodiment of the present disclosure; and
Fig. 8 is a block diagram illustrating a neutralization processing method for an ammonia-containing waste fluid according to an eighth embodiment of the present disclosure.

### DETAILED DESCRIPTION OF THE INVENTION

### [First Embodiment]

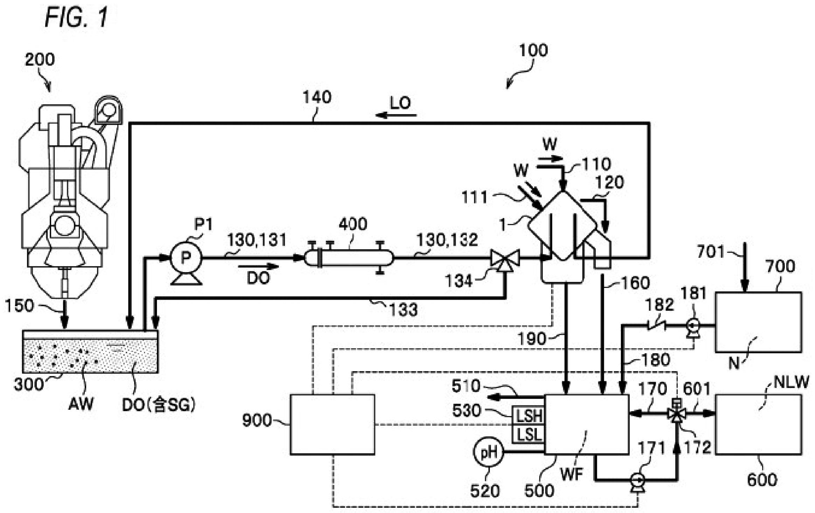

A neutralization processing system 100 for an ammonia-containing waste fluid and a neutralization processing method for an ammonia-containing waste fluid according to a first embodiment of the present disclosure will be described in detail with reference to Fig. 1. In the following description, the same components will be denoted by the same reference numerals, and the description thereof will be omitted.

### «Neutralization Processing System for Ammonia-containing Waste Fluid»

The neutralization processing system (hereinafter, appropriately referred to as a "neutralization processing system") 100 for an ammonia-containing waste fluid illustrated in Fig. 1 is a device for purifying and neutralizing a waste fluid (Hereinafter, referred to as a "waste fluid WF".) such as a lubricating oil LO containing ammonia (Hereinafter, referred to as "ammonia AM".) and sludge SG, a fuel oil, and bilge water. The neutralization processing system 100 is used to neutralize the waste fluid WF containing the ammonia AM used in an engine 200, such as a combustion engine installed in an installation space limited in a ship or the land (for example, remote island power plants or existing power plants).

Hereinafter, a case in which the lubricating oil LO used in the engine 200 for combusting liquid ammonia is treated as the waste fluid WF will be described as an example of the neutralization processing system 100 according to the present disclosure. The neutralization processing system 100 according to the present disclosure can be used for all ammonia waste fluid as long as they are the waste fluid WF containing the ammonia AM, and the following description will be given of an example in which the neutralization processing system 100 includes a purifier 1.

In the engine 200 using the liquid ammonia as a fuel, sludge SG or ammonia water AW may be mixed into the lubricating oil LO in the engine 200.

The neutralization processing system 100 includes the purifier 1. The purifier 1 is a three-phase separation type separation plate type centrifuge that separates a stock solution DO which is the lubricating oil LO mixed with the ammonia water (Hereinafter, it is referred to as "ammonia water AW".) into a light fluid which is the purified lubricating oil LO, a heavy fluid which is the ammonia water AW containing the ammonia AM, and sludge which is a solid content (Hereinafter, referred to as "sludge SG".).

The neutralization processing system 100 mainly includes a lubricating oil tank 300, a lubricating oil supply pump P1, a purifier 1, a neutralization sludge tank 500, a main sludge tank 600, a neutralizer tank 700, a heavy fluid discharge line 120, a stock solution supply line 130, a light fluid discharge line 140, a sludge discharge line 160, a sludge circulation line 170, a neutralizer supply line 180, and a cleaning water discharge line 190.

### <<Engine>>

For example, the engine 200 illustrated in Fig. 1 is a ship diesel engine disposed in the ship, and may be a turbine engine that uses, as a fuel, liquid ammonia having a discharge amount of carbon dioxide as a greenhouse gas of zero. The engine 200 includes a mechanism that connects a crankshaft and a piston with only a connecting rod. In the engine 200, a lateral pressure, which is a lateral force, is generated on the piston, causing uneven wear in a cylinder. Therefore, the lubricating oil LO for improving the movement of the piston is used in the engine 200. The engine 200 may co-combust the liquid ammonia and a fossil fuel such as natural gas.

### «Lubricating Oil Discharge Line»

A lubricating oil discharge line 150 illustrated in Fig. 1 is a piping path for transferring the lubricating oil LO (stock solution DO) used in the engine 200 to the lubricating oil tank 300. The lubricating oil discharge line 150 is connected to the engine 200 at one end and to the lubricating oil tank 300 at the other end.

### «Lubricating Oil Tank and Lubricating Oil»

As illustrated in Fig. 1, the lubricating oil tank 300 is a tank for storing the stock solution DO containing the lubricating oil LO used in the engine 200. The stock solution DO to be supplied from the engine 200 to the lubricating oil tank 300 contains the ammonia AM derived from an ammonia fuel. Therefore, the lubricating oil tank 300 is a tank with a lid that prevents the vaporized ammonia AM from leaking outside the lubricating oil tank 300.

The stock solution DO contains moisture mixed in the engine 200.

### «Ammonia Water and Water»

The ammonia water AW is an alkaline aqueous solution in which the ammonia AM is dissolved in water. The ammonia water AW has a unique stimulus odor. The ammonia water AW may corrode a fluororubber O-ring or a heavy fluid and light fluid impeller made of copper alloy to be used in the purifier 1. Therefore, the other parts are preferably made of a corrosion-resistant material.

### «Stock Solution Supply Line»

The stock solution supply line 130 illustrated in Fig. 1 is a piping path for supplying the stock solution DO (lubricating oil LO mixed with the sludge SG and the ammonia water AW) stored in the lubricating oil tank 300 to the purifier 1. The stock solution supply line 130 includes a heater upstream side line 131 from the lubricating oil tank 300 to a heater 400, and a heater downstream side line 132 from the heater 400 to the purifier 1. The heater upstream side line 131 is provided with the lubricating oil supply pump P1, and the heater downstream side line 132 is provided with a three-way valve 134.

### <<Lubricating Oil Supply Pump>>

The lubricating oil supply pump P1 is a pump for transferring the stock solution DO in the lubricating oil tank 300 from the stock solution supply line 130 to the purifier 1 via the heater 400. As illustrated in Fig. 1, the ammonia water AW is mixed into the stock solution DO in the heater upstream side line 131.

### <<Heater>>

The heater 400 is an oil heater that heats the lubricating oil LO to be transferred to the purifier 1. The heater 400 can increase a solid content and/or moisture separation efficiency in the purifier 1 by heating the lubricating oil LO and decreasing a viscosity. As illustrated in Fig. 1, the ammonia water AW and the sludge SG are mixed into the stock solution DO in the heater downstream side line 132.

### «Light Fluid Discharge Line»

A light fluid discharge line 140 is a flow path for returning the lubricating oil LO (light fluid) purified by the purifier 1 to the lubricating oil tank 300. The light fluid discharge line 140 is a piping path from a discharge port of the purifier 1 to a lubricating oil supply port of the lubricating oil tank 300.

### <<Purifier>>

The purifier 1 is a device for separating and removing from the lubricating oil LO the sludge SG (solid content) or the ammonia water AW contained in the stock solution DO containing the lubricating oil LO used in the engine 200 that uses the ammonia AM as a fuel. The purifier 1 may be, for example, a separation plate type centrifuge that separates the stock solution DO into three phases of fluid (light fluid)-fluid (heavy fluid)-solid content by a centrifugal force of a rotating body that rotates at a high speed, and may be appropriately changed.

### <Sludge Discharge Line>

The sludge discharge line 160 is a discharge path for discharging the waste fluid WF containing the sludge SG centrifuged by the purifier 1 to the neutralization sludge tank 500. The sludge discharge line 160 has an upstream side connected to a sludge discharge port of the purifier 1 and a downstream side connected to the neutralization sludge tank 500 and the main sludge tank 600 via the sludge circulation line 170. The waste fluid WF containing the sludge SG in the purifier 1 is discharged into the sludge discharge line 160 and stored in the neutralization sludge tank 500, and then is stored in the main sludge tank 600 via the sludge circulation line 170. In addition, the waste fluid WF containing the sludge SG stored in the neutralization sludge tank 500 is neutralized by the neutralizer N to be supplied from the neutralizer tank 700 via the neutralizer supply line 180.

### <Cleaning Water Discharge Line>

In order to remove ammonia gas AG remaining in the purifier 1, the inside of the purifier 1 may be cleaned by supplying cleaning water and dissolving the ammonia gas AG in the purifier 1 in the cleaning water. The cleaning water discharge line 190 is a discharge path for discharging the cleaning water injected into a frame of the purifier 1. Therefore, the cleaning water that has taken in the ammonia gas AG in the frame of the purifier 1 is discharged into the neutralization sludge tank 500.

### <Sludge Tank>

The neutralization sludge tank 500 illustrated in Fig. 1 is a tank for storing and neutralizing the waste fluid WF containing the sludge SG separated by the purifier 1. The sludge SG is deposited on an outermost diameter portion side in the rotating body by a centrifugal force of the purifier 1, and is discharged from the sludge discharge port to the neutralization sludge tank 500 via the sludge discharge line 160. The neutralization sludge tank 500 also stores the ammonia water AW (heavy fluid) separated by the purifier 1 or the cleaning water. The neutralization sludge tank 500 is provided with a sludge tank vapor outlet 510, a sensor 520, a level switch 530, the sludge circulation line 170, and the neutralizer supply line 180.

There may be a plurality of neutralization sludge tanks 500. In addition, when the sensor 520 is disposed in the sludge circulation line 170 to be described later, the sensor 520 may not be disposed in the neutralization sludge tank 500.

The sludge tank vapor outlet 510 is an outlet for discharging gas, steam, and the like generated in the neutralization sludge tank 500.

The sensor 520 is a measuring device for measuring a hydrogen ion exponent, an ammonia concentration, and the like of the waste fluid WF containing the sludge SG stored in the neutralization sludge tank 500. The sensor 520 is, for example, a pH meter and an ammonia sensor. The sensor 520 will be described below using a pH meter as an example. The sensor 520 can efficiently neutralize the waste fluid WF by measuring the pH of the waste fluid WF in the neutralization sludge tank 500 and adding an optimum amount of neutralizer N to the waste fluid WF in accordance with the measured value of the pH.

### <Level Switch>

The level switch 530 is a sensor that monitors a storage amount of the waste fluid WF containing the sludge SG stored in the neutralization sludge tank 500. The level switch 530 may be any type that can detect the storage amount of the waste fluid WF containing sludge SG stored in the neutralization sludge tank 500, and may be replaced with another sensor as appropriate. For example, the level switch 530 includes a high level switch LSH and a low level switch LSL.

The high level switch LSH is a switch that operates when the waste fluid WF containing the sludge SG in the neutralization sludge tank 500 reaches a preset high level. The high level switch LSH issues an alarm or stops inflow from the sludge discharge line 160, the neutralizer supply line 180, and the like when the level of the sludge SG in the neutralization sludge tank 500 reaches a predetermined height. Therefore, the high level switch LSH can prevent the neutralization sludge tank 500 from overflowing.

The low level switch LSL is a switch that operates when the waste fluid WF containing the sludge SG in the neutralization sludge tank 500 reaches a preset low level. The low level switch LSL starts the supply from the purifier 1, the sludge circulation line 170, or the neutralizer supply line 180 when the level of the sludge SG in the neutralization sludge tank 500 reaches a predetermined low position. Therefore, the low level switch LSL can prevent the inside of the neutralization sludge tank 500 from becoming empty.

### <Sludge Circulation Line>

The sludge circulation line 170 is a flow path that circulates, in order to efficiently neutralize the waste fluid WF containing the sludge SG, which is stored in the neutralization sludge tank 500, the waste fluid WF containing the sludge SG discharged from the neutralization sludge tank 500 and returned to the neutralization sludge tank 500. The sludge circulation line 170 is provided with a sludge transfer pump 171 and a switching valve 172, and is connected to the main sludge tank transfer line 601. The sludge circulation line 170 may be provided with the sensor 520.

### <Sludge Transfer Pump>

The sludge transfer pump 171 is a pump for transferring or stirring the waste fluid WF containing the sludge SG in the sludge circulation line 170. The sludge transfer pump 171 is disposed between the neutralization sludge tank 500 and the switching valve 172 in the sludge circulation line 170. The sludge transfer pump 171 is electrically connected to a control device 900 and is driven by an electric signal of the control device 900.

### <Switching Valve>

The switching valve 172 is a three-way valve for switching a moving direction of the ammonia-containing waste fluid WF flowing through the sludge circulation line 170 between a neutralization sludge tank 500 side and a main sludge tank transfer line 601 side. The switching valve 172 is disposed in the sludge circulation line 170 at a position downstream of the sludge transfer pump 171 and between the sludge transfer pump 171 and the neutralization sludge tank 500. The switching valve 172 is electrically connected to the control device 900 and is driven to open and close according to an electrical signal of the control device 900.

### <Main Sludge Tank Transfer Line>

The main sludge tank transfer line 601 is a flow path for supplying, to the main sludge tank 600, the ammonia-containing waste fluid WF circulating from the neutralization sludge tank 500 through the sludge circulation line 170. The main sludge tank transfer line 601 has one side connected to the switching valve 172 and the other side connected to the main sludge tank 600.

### <Main Sludge Tank>

The main sludge tank 600 illustrated in Fig. 1 is a tank for storing a neutral liquid waste (hereinafter, referred to as a "neutral liquid waste NLW") that is neutralized in the neutralization sludge tank 500 by neutralizers (Hereinafter, referred to as the "neutralizer N".) from the neutralizer tank 700.

### <Neutralizer Tank>

The neutralizer tank 700 is a tank for storing the neutralizer N for neutralizing and rendering the ammonia-containing waste fluid WF. The neutralizer tank 700 is provided with the neutralizer supply line 180.

### <Neutralizer>

The neutralizer N is used for neutralizing the ammonia-containing waste fluid WF in the neutralization sludge tank 500, and for example, is made of a material having an acidic component such as citric acid. The neutralizer N may be a solid (powder (including a crystalline state)) or a liquid as long as it can neutralize the ammonia-containing waste fluid WF. The neutralizer N is supplied from the neutralizer supply line 180 to the ammonia-containing waste fluid WF in the neutralization sludge tank 500. The neutralizer N is supplied in accordance with the measured value of the pH, the measured value of the ammonia concentration, and the like of the ammonia-containing waste fluid WF detected by the sensor 520, and neutralizes the ammonia-containing waste fluid WF. The neutralizer N is preferably citric acid. Citric acid is likely to be handled and has high safety. The neutralizer N may be citric acid powders (crystals of anhydrous citric acid (C₆H₈O₇) or citric acid hydrate (C₆H₈O₇ H₂O)) or an aqueous citric acid solution.

When the citric acid is used as the neutralizer N, iron oxide may be added to the waste fluid WF as an additive for detoxification. When the citric acid and the iron oxide are added to the ammonia water AW, ferric ammonium citrate is generated. The neutralizer N and the additive for detoxification may be a solid or a liquid.

### <Neutralizer Supply Line>

The neutralizer supply line 180 is a flow path for supplying the neutralizer N in the neutralizer tank 700 to the neutralization sludge tank 500. The neutralizer supply line 180 is provided with a neutralizer transfer pump 181 and a check valve 182.

The neutralizer transfer pump 181 is a pump for suctioning the neutralizer N in the neutralizer tank 700 and sending the neutralizer N from the neutralizer supply line 180 to the neutralization sludge tank 500.

The check valve 182 is a valve that regulates a flow direction of the neutralizer N that flows in the neutralizer supply line 180 from the neutralizer tank 700 toward the neutralization sludge tank 500. **In** other words, the check valve 182 is a valve that prevents the neutralizer N from flowing from the neutralization sludge tank 500 toward the neutralizer tank 700.

### «Control Device»

The control device 900 is a device that is electrically connected to and controls the purifier 1, the sensor 520, the level switch 530, the sludge transfer pump 171, the switching valve 172, and the neutralizer transfer pump 181. The control device 900 performs control to operate the sludge transfer pump 171 and the switching valve 172 to supply the ammonia-containing waste fluid WF from the sludge circulation line 170 to the main sludge tank 600 when the pH or the ammonia concentration detected by the sensor 520 falls below a threshold value.

The control device 900 performs control to operate the neutralizer transfer pump 181 to supply the neutralizer N from the neutralizer supply line 180 to the neutralization sludge tank 500 to neutralize the ammonia-containing waste fluid WF when the pH or the ammonia concentration detected by the sensor 520 exceeds the threshold value.

The control device 900 performs control to operate the sludge transfer pump 171 to supply the ammonia-containing waste fluid WF from the sludge circulation line 170 to the neutralization sludge tank 500 for circulation and stirring when it is determined that the neutralization of the ammonia-containing waste fluid WF is not complete based on the pH or the ammonia concentration detected by the sensor 520.

The control device 900 performs control to operate the sludge transfer pump 171 to supply the ammonia-containing waste fluid WF from the sludge circulation line 170 to the neutralization sludge tank 500 for circulation and stirring when it is determined that the neutralization of the ammonia-containing waste fluid WF is not complete based on the pH or the ammonia concentration detected by the sensor 520, and performs control to operate the neutralizer transfer pump 181 to supply the neutralizer N from the neutralizer supply line 180 to the neutralization sludge tank 500 to neutralize the ammonia-containing waste fluid WF.

The control device 900 drives the purifier 1, the sludge transfer pump 171, and the neutralizer transfer pump 181.

### <<Operations>>

Next, operations of the neutralization processing system 100 for the ammonia-containing waste fluid WF and the neutralization processing method for the ammonia-containing waste fluid WF according to the first embodiment of the present disclosure will be described with reference to Fig. 1.

As illustrated in Fig. 1, the lubricating oil LO (stock solution DO) used in the engine 200 is stored in the lubricating oil tank 300, and then introduced into the purifier 1 from the stock solution supply line 130.

The ammonia water AW and the sludge SG (waste fluid WF) separated by the purifier 1 illustrated in Fig. 1 are discharged from the sludge discharge line 160 into the neutralization sludge tank 500.

On the ship, the sludge SG needs to be unloaded and treated as industrial waste. However, when the ammonia concentration of the sludge SG is high, the unloading may be refused. Therefore, it is preferred to neutralize the waste fluid WF containing the ammonia AM in the ship.

When the gas, steam, and the like are generated in the neutralization sludge tank 500, the gas, steam, and the like are discharged from the sludge tank vapor outlet 510.

During neutralization of the sludge SG stored in the neutralization sludge tank 500, a storage amount of the sludge SG in the neutralization sludge tank 500 is detected by the level switch 530.

In the neutralization sludge tank 500, as illustrated in Fig. 1, at least one of the pH or the ammonia concentration of the waste fluid WF stored in the neutralization sludge tank 500 is measured by the sensor 520 (measurement step).

Then, the neutralizer N is added to the waste fluid WF in the neutralization sludge tank 500 to neutralize the waste fluid WF in accordance with at least one of the measured value of the pH of the waste fluid WF or the measured value of the ammonia concentration of the waste fluid WF measured by the sensor 520 (neutralization step).

The neutralized waste fluid WF in the neutralization sludge tank 500 is circulated through the sludge circulation line 170 by the sludge transfer pump 171 of the sludge circulation line 170 and is supplied to the neutralization sludge tank 500, thereby being stirred (stirring step). In this way, the waste fluid WF containing the ammonia AM can be efficiently neutralized.

The control device 900 continues the circulation and stirring when it is determined that the neutralization is not complete based on the pH or the ammonia concentration of the waste fluid WF in the neutralization sludge tank 500 measured by the sensor 520. During the circulation and stirring, the control device 900 drives the neutralizer transfer pump 181 to continue feeding the neutralizer N into the neutralization sludge tank 500.

The control device 900 supplies the waste fluid WF in the sludge circulation line 170 to the main sludge tank 600 for storage when it is determined that the neutralization has reached a complete level based on the pH or the ammonia concentration of the waste fluid WF measured by the sensor 520.

Except in an emergency, such as when there is a trouble in the purifier 1 or the system and a liquid level in the neutralizer tank 700 rises to an emergency level, the waste fluid WF sent to the main sludge tank 600 can be entirely neutralized.

In this way, the waste fluid WF is neutralized by being circulated to a preset pH value or ammonia concentration, and is stored in the main sludge tank 600 as the neutral liquid waste NLW. Therefore, when the neutralization processing system 100 is used for a bilge treatment, the ammonia-containing waste fluid WF accumulated at a ship bottom can be neutralized to a safe level, and thus it is possible to discharge the ammonia-containing waste fluid WF overboard after the treatment by a bilge separator.

As illustrated in Fig. 1, the neutralization processing system 100 according to the first embodiment is the neutralization processing system 100 for the ammonia-containing waste fluid WF, which neutralizes the ammonia-containing waste fluid WF containing the ammonia AM, and the neutralization processing system 100 includes: one or more neutralization sludge tanks 500; the sludge discharge line 160 configured to supply the ammonia-containing waste fluid WF to the neutralization sludge tank 500; the neutralizer supply line 180 configured to supply the neutralizer N to the neutralization sludge tank 500; the sludge circulation line 170 configured to discharge the ammonia-containing waste fluid WF stored in the neutralization sludge tank 500 from the neutralization sludge tank 500 and return the ammonia-containing waste fluid WF to the neutralization sludge tank 500; and the sludge transfer pump 171 provided in the sludge circulation line 170 and configured to move the ammonia-containing waste fluid WF.

According to such a configuration, the neutralization processing system 100 includes the neutralizer supply line 180, and thus the neutralizer N can be supplied to the neutralization sludge tank 500 to neutralize the ammonia-containing waste fluid WF. Furthermore, the neutralized ammonia-containing waste fluid WF in the neutralization sludge tank 500 can be circulated through the sludge circulation line 170 by a power of the sludge transfer pump 171 and supplied to the neutralization sludge tank 500, thereby being stirred. Therefore, the ammonia-containing waste fluid WF containing the ammonia AM and the like mixed in the lubricating oil LO can be neutralized to a safe level after the separation, and thus the sludge SG can be unloaded and incinerated by a boiler on the ship.

In addition, when the neutralization processing system 100 is used for a bilge treatment, the ammonia-containing waste fluid WF accumulated at the ship bottom can be neutralized to a safe level, and thus it is possible to discharge the ammonia-containing waste fluid WF overboard after the treatment by the bilge separator.

The neutralization processing system 100 includes the purifier 1 configured to separate the stock solution DO containing the lubricating oil LO used in the engine 200 that uses the ammonia AM as a fuel into the lubricating oil LO, the sludge SG, and the ammonia water AW to obtain the ammonia-containing waste fluid WF.

According to such a configuration, the neutralization processing system 100 includes the purifier 1, and thus the stock solution DO can be separated into the lubricating oil LO, the sludge SG, and the ammonia water AW and then removed, making it easier to dispose of the sludge SG and the ammonia AM.

As illustrated in Fig. 1, the neutralization processing system 100 further includes: the main sludge tank 600 configured to store the neutral liquid waste NLW after the ammonia-containing waste fluid WF is neutralized; and the main sludge tank transfer line 601 branched from the sludge circulation line 170 and configured to supply the neutral liquid waste NLW to the main sludge tank 600, and the sludge circulation line 170 is provided with the switching valve 172 for switching the moving direction of the ammonia-containing waste fluid WF between the main sludge tank transfer line 601 and the sludge circulation line 170.

According to such a configuration, the neutralization processing system 100 includes the sludge circulation line 170, and thus the ammonia-containing waste fluid WF neutralized in the neutralization sludge tank 500 can be circulated and returned, thereby being neutralized a plurality of times.

In addition, the neutralization processing system 100 includes the switching valve 172, and thus the ammonia-containing waste fluid WF in the neutralizer N flowing through the sludge circulation line 170 can be allowed to flow into the main sludge tank 600 and stored therein.

As illustrated in Fig. 1, the neutralization sludge tank 500 includes: the sensor 520 configured to measure the pH or the ammonia concentration of the ammonia-containing waste fluid WF and disposed in either or both of the neutralization sludge tank 500 and the sludge circulation line 170; and the control device 900 configured to control the sludge transfer pump 171 and the switching valve 172 based on a signal from the sensor 520, in which the control device 900 performs control to switch the switching valve 172 to supply neutralized ammonia-containing waste fluid WF to the main sludge tank 600 and operate the sludge transfer pump 171 when the pH or the ammonia concentration detected by the sensor 520 falls below the threshold value.

According to such a configuration, when it is detected by the sensor 520 that the pH and the ammonia concentration of the ammonia-containing waste fluid WF in the neutralization sludge tank 500 are neutralized to an appropriate concentration, the ammonia-containing waste fluid WF can be sent to and stored in the main sludge tank 600.

As illustrated in Fig. 1, the neutralization sludge tank 500 includes the sensor 520 configured to measure the pH or the ammonia concentration of the ammonia-containing waste fluid WF, the sensor 520 configured to measure the pH or the ammonia concentration of the ammonia-containing waste fluid WF is disposed in either or both of the neutralization sludge tank 500 and the sludge circulation line 170, the sensor 520 and the sludge transfer pump 171 are connected to the control device 900, the neutralizer supply line 180 includes the neutralizer transfer pump 181 for supplying the neutralizer N stored in the neutralizer tank 700 to the neutralization sludge tank 500, and the control device 900 performs control to operate the neutralizer transfer pump 181 to supply the neutralizer N from the neutralizer supply line 180 to the neutralization sludge tank 500 to neutralize the ammonia-containing waste fluid WF when the pH or the ammonia concentration detected by the sensor 520 exceeds the threshold value.

According to such a configuration, when the pH or the ammonia concentration of the ammonia-containing waste fluid WF in the neutralization sludge tank 500 is large, the concentration of the ammonia-containing waste fluid WF can be detected by the sensor 520 to operate the neutralizer transfer pump 181. Therefore, the neutralizer transfer pump 181 can supply the neutralizer N to the neutralization sludge tank 500 according to the concentration of the ammonia-containing waste fluid WF to neutralize the ammonia-containing waste fluid WF to a desired concentration.

As illustrated in Fig. 1, the neutralization sludge tank 500 includes the sensor 520 configured to measure the pH or the ammonia concentration of the ammonia-containing waste fluid WF and disposed in either or both of the neutralization sludge tank 500 and the sludge circulation line 170, the sensor 520 and the sludge transfer pump 171 are connected to the control device 900, and the control device 900 performs control to operate the sludge transfer pump 171 to supply the ammonia-containing waste fluid WF from the sludge circulation line 170 to the neutralization sludge tank 500 for circulation and stirring when it is determined that the neutralization of the ammonia-containing waste fluid WF is not complete based on the pH or the ammonia concentration detected by the sensor 520.

According to such a configuration, the sensor 520 is provided, and thus it is possible to detect and check whether the neutralization of the ammonia-containing waste fluid WF in the neutralization sludge tank 500 is not complete. If the neutralization is not complete, the control device 900 can supply the ammonia-containing waste fluid WF from the sludge circulation line 170 to the neutralization sludge tank 500 and circulate and stir the same to promote the neutralization.

As illustrated in Fig. 1, the neutralizer supply line 180 includes the neutralizer transfer pump 181 for supplying the neutralizer N stored in the neutralizer tank 700 to the neutralization sludge tank 500, and the control device 900 performs control to operate the sludge transfer pump 171 to supply the ammonia-containing waste fluid WF from the sludge circulation line 170 to the neutralization sludge tank 500 for circulation and stirring when it is determined that the neutralization of the ammonia-containing waste fluid WF is not complete based on the pH or the ammonia concentration detected by the sensor 520, and performs control to operate the neutralizer transfer pump 181 to supply the neutralizer N from the neutralizer supply line 180 to the neutralization sludge tank 500 to neutralize the ammonia-containing waste fluid WF.

According to such a configuration, when the ammonia-containing waste fluid WF is circulating through the sludge circulation line 170, the control device 900 can operate the neutralizer transfer pump 181 to automatically supply the neutralizer N to the neutralization sludge tank 500, and efficiently perform stirring.

As illustrated in Fig. 1, the control device 900 drives the purifier 1, the sludge transfer pump 171, and the neutralizer transfer pump 181.

According to such a configuration, the control device 900 can drive the purifier 1, the sludge transfer pump 171, and the neutralizer transfer pump 181 in conjunction with one another. Therefore, the present disclosure can efficiently neutralize the ammonia-containing waste fluid WF discharged from the purifier 1 and eliminate the influence on the environment.

As illustrated in Fig. 1, the neutralization processing method for the ammonia-containing waste fluid WF, which neutralizes the ammonia-containing waste fluid WF containing the ammonia AM, includes: supplying the neutralizer N from the neutralizer supply line 180 to the neutralization sludge tank 500 in which the ammonia-containing waste fluid WF is stored to neutralize the ammonia-containing waste fluid WF; and circulating the neutralized ammonia-containing waste fluid WF in the neutralization sludge tank 500 through the sludge circulation line 170 by the sludge transfer pump 171 provided in the sludge circulation line 170, and supplying the ammonia-containing waste fluid WF to the neutralization sludge tank 500, thereby stirring the ammonia-containing waste fluid WF.

According to such a configuration, the neutralizer N can be supplied from the neutralizer supply line 180 to the neutralization sludge tank 500 to neutralize the ammonia-containing waste fluid WF. In addition, the ammonia-containing waste fluid WF in the neutralization sludge tank 500 can be circulated through the sludge circulation line 170 by a power of the sludge transfer pump 171 and supplied to the neutralization sludge tank 500, thereby being stirred. Therefore, the ammonia-containing waste fluid WF containing the ammonia AM and the like mixed in the lubricating oil LO can be neutralized to a safe level after the separation, and thus the sludge SG can be unloaded and incinerated on the ship.

As illustrated in Fig. 1, the neutralization processing method for the ammonia-containing waste fluid WF further includes: supplying the ammonia-containing waste fluid WF neutralized in the neutralization sludge tank 500 from the sludge circulation line 170 to the main sludge tank 600 and storing the same therein.

According to such a configuration, the ammonia-containing waste fluid WF neutralized in the neutralization sludge tank 500 is supplied from the sludge circulation line 170 to the main sludge tank 600 and stored therein, and thus a large amount of the ammonia-containing waste fluid WF can be neutralized.

### [Second Embodiment]

The present disclosure is not limited to the first embodiment, various modifications and changes can be made within the scope of the technical idea of the present disclosure, and it goes without saying that the present disclosure also covers the modified and changed disclosure.

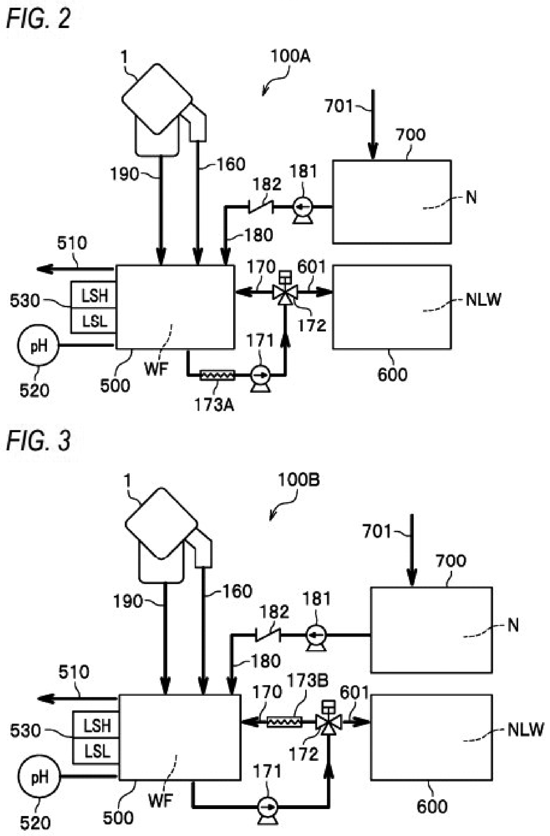

Fig. 2 is a block diagram illustrating main parts of a neutralization processing system 100A for the ammonia-containing waste fluid WF and a neutralization processing method for the ammonia-containing waste fluid WF according to a second embodiment of the present disclosure, in which a control device is omitted.

As illustrated in Fig. 2, the sludge circulation line 170 may be provided with a static mixer 173A (also called an "in-line mixer") that mixes the ammonia-containing waste fluid WF and the neutralizer N. In this case, the static mixer 173A is disposed in the sludge circulation line 170 between the neutralization sludge tank 500 and the sludge transfer pump 171.

The static mixer 173A can perform mixing without using any power at all, and thus the ammonia-containing waste fluid WF and the neutralizer N can be mixed efficiently according to such a configuration.

### [Third Embodiment]

Fig. 3 is a block diagram illustrating main parts of a neutralization processing system 100B for the ammonia-containing waste fluid WF and a neutralization processing method for the ammonia-containing waste fluid WF according to a third embodiment of the present disclosure, in which a control device is omitted.

The static mixer 173A of the second embodiment illustrated in Fig. 2 may be disposed between the switching valve 172 of the sludge circulation line 170 and the neutralization sludge tank 500, as in a case of a static mixer 173B illustrated in Fig. 3.

In this way, the neutralization processing system 100B also has the same operation and effect as the neutralization processing system 100 of the second embodiment.

### [Fourth Embodiment]

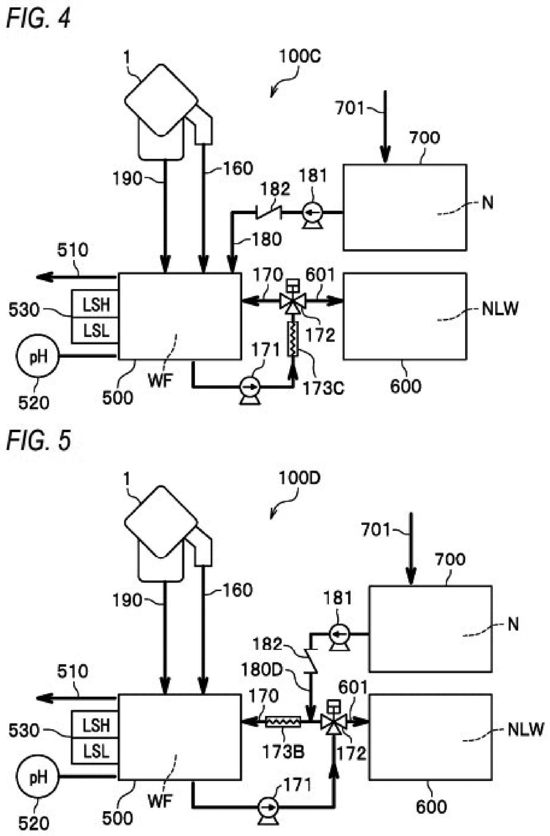

Fig. 4 is a block diagram illustrating main parts of a neutralization processing system 100C for the ammonia-containing waste fluid WF and a neutralization processing method for the ammonia-containing waste fluid WF according to a fourth embodiment of the present disclosure, in which a control device is omitted.

The static mixer 173A of the second embodiment illustrated in Fig. 2 may be disposed between the sludge transfer pump 171 and the switching valve 172 of the sludge circulation line 170, as in a case of a static mixer 173C illustrated in Fig. 4.

In this way, the neutralization processing system 100C also has the same operation and effect as the neutralization processing system 100 of the second embodiment.

### [Fifth Embodiment]

Fig. 5 is a block diagram illustrating main parts of a neutralization processing system 100D for the ammonia-containing waste fluid WF and a neutralization processing method for the ammonia-containing waste fluid WF according to a fifth embodiment of the present disclosure, in which a control device is omitted.

The neutralizer supply line 180 of the third embodiment illustrated in Fig. 3 may be connected between the switching valve 172 of the sludge circulation line 170 and the static mixer 173B, as in a neutralizer supply line 180D illustrated in Fig. 5.

In this way, the neutralization processing system 100D also has the same operation and effect as the neutralization processing system 100 of the second embodiment.

### [Sixth Embodiment]

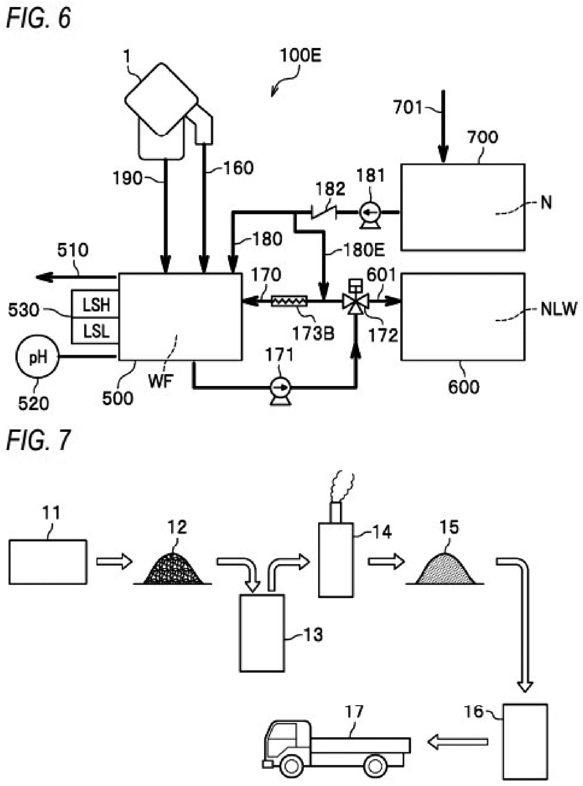

Fig. 6 is a block diagram illustrating main parts of a neutralization processing system 100E for the ammonia-containing waste fluid WF and a neutralization processing method for the ammonia-containing waste fluid WF according to a sixth embodiment of the present disclosure, in which a control device is omitted.

The neutralization processing system 100B of the third embodiment illustrated in Fig. 3 may connect a second neutralizer supply line 180E branched from the neutralizer supply line 180 to the sludge circulation line 170, as in the neutralization processing system 100E illustrated in Fig. 6.

In this case, for example, the second neutralizer supply line 180E is branched from between the check valve 182 and the neutralization sludge tank 500, and a downstream side is connected between the static mixer 173B and the switching valve 172.

According to such a configuration, by providing the second neutralizer supply line 180E, the neutralizer N in the neutralizer supply line 180 can also be supplied to the sludge circulation line 170 to efficiently neutralize the ammonia-containing waste fluid WF.

### [Seventh Embodiment]

Fig. 7 is a block diagram illustrating a neutralization processing method for an ammonia-containing waste fluid WF according to a seventh embodiment of the present disclosure. The neutralization processing method for the ammonia-containing waste fluid WF according to a seventh embodiment of the present disclosure will be described with reference to Figs. 1 and 7.

The lubricating oil LO used in the engine 200 on the ship becomes the stock solution DO containing the ammonia water AW and the sludge SG (see Fig. 1). The stock solution DO is centrifuged into the sludge SG, the ammonia water AW, and the lubricating oil LO by the purifier 1 (sludge separation step 11).

The sludge SG separated by the purifier 1 is discharged from the purifier 1 as illustrated in Fig. 7 (sludge discharge step 12). The sludge SG is then reduced in weight, accommodated in a storage container such as a drum can, and is stored in a state of closing an opening (sludge storage step 13).

Next, the sludge SG accommodated in the storage container such as a drum can is incinerated in an incinerator inside the ship and becomes incineration ash (sludge incineration treatment step 14). Subsequently, the sludge SG that has become the incineration ash is then scraped out of the incinerator (incineration ash scraping step 15). The incineration ash scraped out of the incinerator is accommodated in the storage container such as a drum can and is stored in an engine room of the ship in a state of closing the opening (incineration ash storage step 16).

The sludge SG that has become the incineration ash and is packed into the storage container such as a drum can is unloaded as industrial waste when the ship approaches a port, and is transported to a disposal site by a truck for disposal. In this way, the waste fluid WF containing the ammonia AM generated on the ship is incinerated on the ship and becomes the incineration ash, which is packed into the storage container such as a drum can and stored therein, and then unloaded and disposed of.

### [Eighth Embodiment]

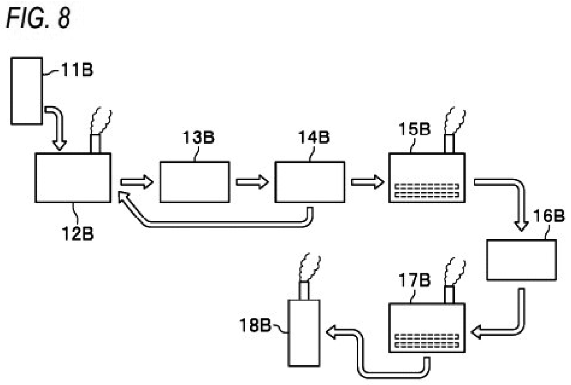

Fig. 8 is a block diagram illustrating a neutralization processing method for an ammonia-containing waste fluid WF according to an eighth embodiment of the present disclosure.

Next, the neutralization processing method for the ammonia-containing waste fluid WF according to an eighth embodiment of the present disclosure will be described with reference to Fig. 8.

The system oil, which is used in the engine 200 and accumulated in a crankcase, becomes the stock solution DO containing the ammonia water AW and the sludge SG (see Fig. 1). The stock solution DO is taken out from the engine 200 (system oil taking-out step 11B).

As illustrated in Fig. 8, the system oil taken out from the engine 200 is transferred to and stored in a sump tank (sump tank storage step 12B). A volatile gas remaining in the sump tank has a high concentration and is discharged to the outside from a pipe air vent provided in an upper portion of the sump tank.

Then, the stock solution DO remaining in the sump tank is suctioned by a transfer pump and sent to the purifier 1 (transfer pump transferring step 13B). The stock solution DO sent to the purifier 1 is centrifuged into the sludge SG, the ammonia water AW, and the lubricating oil LO by the purifier 1 in a purifier purifying step 14B, and then is returned to the sump tank or transferred to a sludge tank as the waste fluid WF consisting of the sludge SG and the ammonia water AW.

The waste fluid WF sent to the sludge tank is subjected to a heat evaporation treatment in the sludge tank (heat evaporation treatment step 15B). Therefore, steam and gas are generated in an oil waste tank. The steam and gas in the oil waste tank are discharged to the outside of the oil waste tank.

The waste fluid WF remaining in the sludge tank is suctioned by the sludge pump and sent into the oil waste tank (system oil transferring step 16B). The waste fluid WF transferred to the oil waste tank is subjected to the heat evaporation treatment (heat evaporation treatment step 17B). Therefore, the steam and gas are generated in an oil waste tank. The steam and gas in the oil waste tank are discharged to the outside of the oil waste tank.

The waste fluid WF remaining in the oil waste tank is sent to the incinerator to be incinerated (sludge incineration treatment step 18B). Incinerated smoke generated by the incineration treatment in the incinerator is discharged to the outside from the incinerator. In this way, the system oil containing the ammonia AM generated on the ship is subjected to the heat evaporation treatment and the sludge incineration treatment on the ship for disposal.

### [Modifications]

In the first to sixth embodiments (see Figs. 1 to 6), the neutralization processing systems 100, 100A, 100B, 100C, 100D, and 100E have been described as including one purifier 1, but there may be a plurality of purifiers 1. In this case, there may be a plurality of neutralization sludge tanks 500 to which the waste fluid WF is supplied from the purifier 1 and a plurality of main sludge tanks 600 that store the neutral liquid waste NLW.

## Claims

1. A neutralization processing system for an ammonia-containing waste fluid, which neutralizes the ammonia-containing waste fluid containing ammonia, the neutralization processing system comprising:
one or more neutralization sludge tanks;
a sludge discharge line configured to supply the ammonia-containing waste fluid to the neutralization sludge tank;
a neutralizer supply line configured to supply a neutralizer to the neutralization sludge tank;
a sludge circulation line configured to discharge the ammonia-containing waste fluid stored in the neutralization sludge tank from the neutralization sludge tank and return the ammonia-containing waste fluid to the neutralization sludge tank; and
a sludge transfer pump provided in the sludge circulation line and configured to move the ammonia-containing waste fluid.

2. The neutralization processing system for an ammonia-containing waste fluid according to claim 1, further comprising:
a purifier configured to separate a stock solution containing a lubricating oil used in an engine that uses the ammonia as a fuel into the lubricating oil, sludge, and ammonia water to obtain the ammonia-containing waste fluid.

3. The neutralization processing system for an ammonia-containing waste fluid according to claim 1 or 2, further comprising:
a main sludge tank configured to store a neutral liquid waste after the ammonia-containing waste fluid is neutralized; and
a main sludge tank transfer line branched from the sludge circulation line and configured to supply the neutral liquid waste to the main sludge tank, wherein
the sludge circulation line is provided with a switching valve for switching a moving direction of the ammonia-containing waste fluid between the main sludge tank transfer line and the sludge circulation line.

4. The neutralization processing system for an ammonia-containing waste fluid according to claim 3, further comprising:
a sensor configured to measure a pH or an ammonia concentration of the ammonia-containing waste fluid and disposed in either or both of the neutralization sludge tank and the sludge circulation line; and
a control device configured to control the sludge transfer pump and the switching valve based on a signal from the sensor, wherein
the control device performs control to switch the switching valve to supply the neutralized ammonia-containing waste fluid to the main sludge tank and operate the sludge transfer pump when the pH or the ammonia concentration detected by the sensor falls below a threshold value.

5. The neutralization processing system for an ammonia-containing waste fluid according to claim **1,** further comprising:
a sensor configured to measure a pH or an ammonia concentration of the ammonia-containing waste fluid and disposed in either or both of the neutralization sludge tank and the sludge circulation line, wherein
the sensor and the sludge transfer pump are connected to a control device,
the neutralizer supply line includes a neutralizer transfer pump for supplying the neutralizer stored in a neutralizer tank to the neutralization sludge tank, and
the control device performs control to operate the neutralizer transfer pump to supply the neutralizer from the neutralizer supply line to the neutralization sludge tank to neutralize the ammonia-containing waste fluid when the pH or the ammonia concentration detected by the sensor exceeds a threshold value.

6. The neutralization processing system for an ammonia-containing waste fluid according to claim 2, further comprising:
a sensor configured to measure a pH or an ammonia concentration of the ammonia-containing waste fluid and disposed in either or both of the neutralization sludge tank and the sludge circulation line, wherein
the sensor and the sludge transfer pump are connected to a control device, and
the control device performs control to operate the sludge transfer pump to supply the ammonia-containing waste fluid from the sludge circulation line to the neutralization sludge tank for circulation and stirring when it is determined that the neutralization of the ammonia-containing waste fluid is not complete based on the pH or the ammonia concentration detected by the sensor.

7. The neutralization processing system for an ammonia-containing waste fluid according to claim 6, wherein
the neutralizer supply line includes a neutralizer transfer pump for supplying the neutralizer stored in the neutralizer tank to the neutralization sludge tank, and
the control device performs control to operate the sludge transfer pump to supply the ammonia-containing waste fluid from the sludge circulation line to the neutralization sludge tank for circulation and stirring when it is determined that the neutralization of the ammonia-containing waste fluid is not complete based on the pH or the ammonia concentration detected by the sensor, and performs control to operate the neutralizer transfer pump to supply the neutralizer from the neutralizer supply line to the neutralization sludge tank to neutralize the ammonia-containing waste fluid.

8. The neutralization processing system for an ammonia-containing waste fluid according to claim 7, wherein
the control device drives the purifier, the sludge transfer pump, and the neutralizer transfer pump.

9. The neutralization processing system for an ammonia-containing waste fluid according to claim **1,** wherein
the sludge circulation line is provided with a static mixer or an in-line mixer that mixes the ammonia-containing waste fluid and the neutralizer.

10. The neutralization processing system for an ammonia-containing waste fluid according to claim **1,** wherein
the neutralizer supply line includes a second neutralizer supply line branched from the neutralizer supply line and connected to the sludge circulation line.

11. A neutralization processing method for an ammonia-containing waste fluid, which neutralizes the ammonia-containing waste fluid containing ammonia, the neutralization treatment method comprising:
supplying a neutralizer from a neutralizer supply line to a neutralization sludge tank in which the ammonia-containing waste fluid is stored to neutralize the ammonia-containing waste fluid; and
circulating the neutralized ammonia-containing waste fluid in the neutralization sludge tank through a sludge circulation line by a sludge transfer pump provided in the sludge circulation line, and supplying the ammonia-containing waste fluid to the neutralization sludge tank, thereby stirring the ammonia-containing waste fluid.

12. The neutralization processing method for an ammonia-containing waste fluid according to claim **11,** further comprising:
supplying the ammonia-containing waste fluid neutralized in the neutralization sludge tank from the sludge circulation line to a main sludge tank and storing the same therein.

13. The neutralization processing method for an ammonia-containing waste fluid according to claim 11 or 12, further comprising:
mixing the ammonia-containing waste fluid circulating through the sludge circulation line and the neutralizer by a static mixer.
